# EUROPEAN PATENT SPECIFICATION

(11) **EP 3 715 954 B1**
(45) Date of publication and mention of the grant of the patent: **01.10.2025**
(21) Application number: 20160032.7
(22) Date of filing: 28.02.2020
(51) Int. Cl.: G03G 15/00

(54) **IMAGE FORMING APPARATUS DETERMINING STATES OF MEMBERS**
BILDERZEUGUNGSVORRICHTUNG ZUR BESTIMMUNG DER ZUSTÄNDE VON GLIEDERN
APPAREIL DE FORMATION D'IMAGE POUR DÉTERMINER DES ÉTATS D'ÉLÉMENTS

(30) Priority: 26.03.2019 JP 2019058899
(43) Date of publication of application: 30.09.2020
(60) Divisional application: 25198376.3
(73) Proprietor: CANON KABUSHIKI KAISHA, OHTA-KU Tokyo 146-8501 (JP)
(72) Inventor: SUZUKI, Yohei, Ohta-ku, Tokyo 146-8501 (JP); AZAMI, Junya, Ohta-ku, Tokyo 146-8501 (JP); HARA, Seiji, Ohta-ku, Tokyo 146-8501 (JP); MORI, Atsunobu, Ohta-ku, Tokyo 146-8501 (JP); MONDE, Masafumi, Ohta-ku, Tokyo 146-8501 (JP); HOTOGI, Tatsuya, Ohta-ku, Tokyo 146-8501 (JP); SHIOMICHI, Hirotaka, Ohta-ku, Tokyo 146-8501 (JP)
(74) Representative: TBK

(56) References cited:
- US-A1- 2009 097 870
- US-A1- 2012 183 313
- US-A1- 2015 309 459
- US-A1- 2017 017 181
- US-A1- 2018 356 282

## Description

### BACKGROUND OF THE INVENTION

### Field of the Invention

The present invention relates to an image forming apparatus that determines whether a specific sound is occurring when being in operation.

### Description of the Related Art

Image forming apparatuses such as a copier and a laser printer include replacement components that are to be replaced due to their lifetimes. When a replacement component is used in a period exceeding its lifetime, a specific sound may be generated or the sound may change according to the state of the component. For example, in a feeding unit that feeds sheets to a conveyance path, as a result of the outer diameter and the surface property of the roller changing due to wear-out of its roller surface, a specific sound is generated. The generation of a specific sound is one of the signs indicating that a replacement component is used past its lifetime and a failure may occur, therefore it is desired that the generation of a specific sound is determined and a replacement component that generates the specific sound is specified.

Japanese Patent Laid-Open No. JP 2004 - 226 482 A discloses a configuration in which a sound collector is arranged inside an image forming apparatus, and a component that generates a specific sound is detected by comparing a sound collected by the sound collector with the sound in a normal state.

Japanese Patent Laid-Open No. JP 2016 - 55 933 A discloses a configuration in which an ultrasonic wave is transmitted from a transmitting unit, and a receiving unit receives an ultrasonic wave that has passed through a sheet, and as a result information regarding the sheet is detected.

However, if both of the configuration in which a specific sound is detected in order to determine the state of a member, as in Japanese Patent Laid-Open No. JP 2004 - 226 482 A, and the configuration in which information regarding a sheet is detected, as in Japanese Patent Laid-Open No. JP 2016 - 55 933 A, are provided in an apparatus, following problems are incurred. First, the space for accommodating both of the configurations inside the apparatus increases. Also, the number of components of the apparatus increases. Moreover, the cost of the apparatus increases.

Document US 2015/309459 A1 discloses a recording medium determination apparatus which includes a transmission unit for transmitting an ultrasonic wave, a receiving unit for outputting a signal corresponding to the ultrasonic wave, a peak extraction unit for detecting a value of the signal output from the receiving unit, a control unit for determining basis weight of a recording medium based on the value of the signal, and a timer for measuring a period of time from when the transmission unit transmits the ultrasonic wave to the detection by the peak extraction unit. The control unit calculates, based on a period of time measured by the timer at the time of factory shipment and a period of time measured by the timer after the factory shipment, variation of a distance between the transmission unit and the receiving unit after the factory shipment.

Document US 2018/356282 A1 discloses a diagnostic device which includes a reception unit and a determination unit. The reception unit is configured to receive context information and sensing information. The context information corresponds to a certain operation of a target item that constitutes a target device. The context information is a piece of a plurality of pieces of context information each describing an operation of the target item determined depending on a type of operation of the target device. The sensing information is on a physical quantity that varies in accordance with the operation of the target item. The determination unit is configured to determine a state of the target item based on the sensing information detected while the target item is performing the certain operation, and based on a model corresponding to the received context information. The model is a model of one or more models respectively defined for one or more pieces of the context information.

Document US 2012/183313 A1 an image forming apparatus having a rotary image bearing member, a charging device to charge the image bearing member, an irradiator to irradiate the image bearing member to form a latent electrostatic image thereon, a developing device to develop the latent electrostatic image with a developing agent containing toner to obtain a visible image, a transfer device to transfer the visible image to a recording medium, a first cleaner that slidably contacts the image bearing member to remove toner remaining thereon, a driving mechanism to drive the image bearing member at different linear speeds, a noise detector provided in the vicinity of the image bearing member to detect noise, and an abnormal noise predictor device to predict whether abnormal noise hear during image formation based on noise detected by the noise detector when the image bearing member is driven not during image formation at a linear speed different from that during image formation.

Document US 2009/097870 A1 discloses an abnormal sound diagnostic apparatus for an image formation device, which includes: a specification section that specifies an independently operable drive section; an operation section that selectively operates the drive section specified by the specification section; a receiving section that receives an abnormal sound confirmation input which is inputted in a case where an abnormal sound occurs by operating the drive section through the operation section; and an identifying section that, on the basis of the abnormal sound confirmation input received by the receiving section, identifies the drive section specified by the specification section as an abnormal sound occurring location.

Document US 2017/017181 A1 discloses an image forming apparatus which includes an image forming unit, a transmission unit, a reception unit, a control unit configured to obtain a time period until the reception unit receives a first ultrasonic wave via a first recording material and an amplitude value thereof at a reference temperature, obtain a time period until the reception unit receives a second ultrasonic wave via a second recording material and an amplitude value thereof at a different temperature, control an image formation condition for forming the image on the first recording material on the basis of the amplitude value of the first ultrasonic wave, obtain a difference time period between reception of the first and second ultrasonic waves, and control an image formation condition for forming the image on the second recording material on the basis of the difference time period and the amplitude value of the second ultrasonic wave.

It is an object of the invention to provide an image forming apparatus having an improved structure.

### SUMMARY OF THE INVENTION

The present invention is realized, for example, by an image forming apparatus as specified in claim 1. Advantageous further developments are as set forth in the dependent claims 2 to 14.

Further features of the present invention will become apparent from the following description of exemplary embodiments with reference to the attached drawings.

### BRIEF DESCRIPTION OF THE DRAWINGS

FIG 1 is a configuration diagram of an image forming apparatus according to one embodiment.
FIG. 2 is a block diagram of a basis weight detection control unit according to one embodiment.
FIG. 3 is a block diagram of an abnormal sound determination control unit according to one embodiment.
FIG. 4 is a diagram illustrating determination information according to one embodiment.
FIG. 5 is a flowchart of abnormal sound determination processing according to one embodiment.
FIG. 6 is a diagram illustrating an example of a signal level when an abnormal sound of a feeding unit is determined.
FIG. 7 is a diagram illustrating an example of a signal level when an abnormal sound of a roller bearing is determined.
FIG. 8 is a diagram illustrating an example of a signal level when an abnormal sound of a roller contact is determined.
FIG. 9 is a diagram illustrating an example of a signal level when an abnormal sound of a cleaning unit is determined.
FIG. 10 is a diagram illustrating an example of a signal level when the replacement timing of a feeding driving unit is determined.
FIG. 11 is a configuration diagram of an image forming apparatus according to one embodiment.
FIG. 12 is a block diagram of a double feed detection control unit according to one embodiment.
FIG. 13 is a diagram illustrating a configuration relating to basis weight detection and abnormal sound determination according to one embodiment.
FIG. 14 is a flowchart of processing relating to the basis weight detection and the abnormal sound determination according to one embodiment.
FIG. 15 is a diagram illustrating a cross-sectional view of a MEMS microphone according to one embodiment.
FIG. 16 is a diagram illustrating a frequency characteristic of the MEMS microphone according to one embodiment.

### DESCRIPTION OF THE EMBODIMENTS

Hereinafter, embodiments will be described in detail with reference to the attached drawings. Note, the following embodiments are not intended to limit the scope of the claimed invention. Furthermore, in the attached drawings, the same reference numerals are given to the same or similar configurations, and redundant description thereof is omitted.

### First embodiment

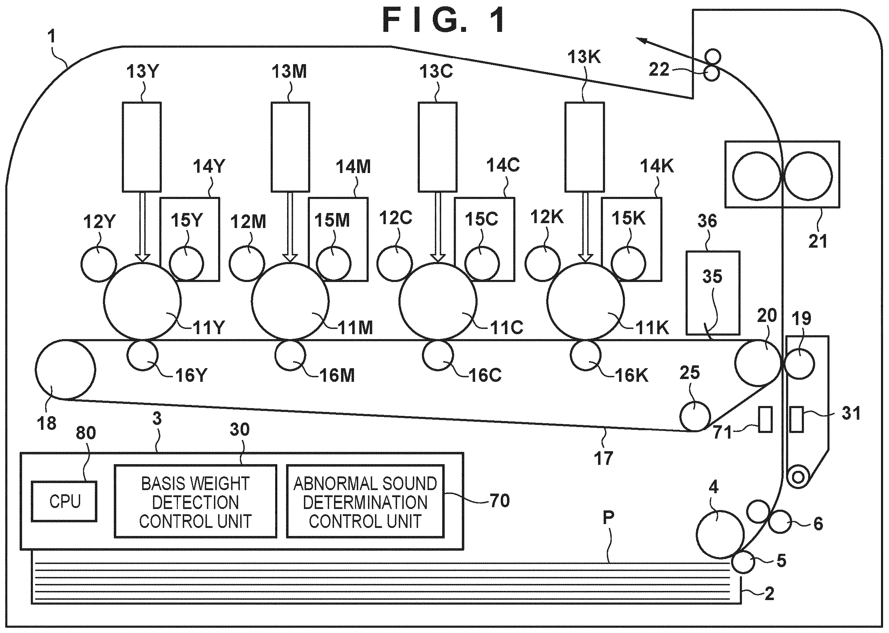

FIG. 1 is a configuration diagram of an image forming apparatus 1 in the present embodiment. In FIG. 1, Y, M, C, and K at the end of reference signs respectively indicate that the colors of toner to which members denoted by these reference signs are related when an image is formed are yellow, magenta, cyan, and black. Note that the following description will use reference signs without Y, M, C, and K at the end in cases where the colors do not need to be distinguished. A photoconductive member 11, which is an image carrier, is rotationally driven in the clockwise direction in the diagram when an image is formed. A charging roller 12 charges the surface of the photoconductive member 11 at a predetermined potential. An optical unit 13 forms an electrostatic latent image on the photoconductive member 11 by exposing the photoconductive member 11 with light. A developing device 14 has developer, and forms a developer image (image) by developing the electrostatic latent image on the photoconductive member 11 using a developing roller 15. A primary transfer roller 16 outputs a primary transfer bias, and forms the developer image on an intermediate transfer belt 17, which is an image carrier, by transferring the developer image on the photoconductive member 11 to the intermediate transfer belt 17. Note that a full-color developer image is formed on the intermediate transfer belt 17 by transferring developer images formed on the respective photoconductive members 11Y, 11M, 11C, and 11K to the intermediate transfer belt 17 so as to be overlaid thereon.

The intermediate transfer belt 17 is extended between a driving roller 18, a tension roller 25, and a secondary transfer counter roller 20, and is rotationally driven, following the rotation of the driving roller 18, in the counterclockwise direction in the diagram when an image is formed. With this, the developer image transferred to the intermediate transfer belt 17 is conveyed to a position opposing a secondary transfer roller 19. Meanwhile, a recording material (sheet) P stored in a cassette 2 is fed to a conveyance path by a feeding roller 4. A separation roller 5 separates the recording materials P sheet by sheet when the recording materials P are fed from the cassette 2. The feeding roller 4 and the separation roller 5 constitute a feeding unit. In a period in which an unshown electromagnetic clutch is in an ON state, a rotary driving force from an unshown motor is transmitted to the feeding roller 4, and with this, the feeding roller 4 is rotationally driven. In a period in which the electromagnetic clutch is in an OFF state, transmission of the rotary driving force from the unshown motor to the feeding roller 4 is cut off. A conveyance roller pair 6 conveys the fed recording material P downstream of the conveyance path, that is, toward a position opposing the secondary transfer roller 19. The secondary transfer roller 19 outputs a secondary transfer bias, and transfers the developer image on the intermediate transfer belt 17 to the recording material P. Note that the developer that remains on the intermediate transfer belt 17 without being transferred to the recording material P is collected to a cleaning unit 36 by a cleaning blade 35. After the developer image is transferred, the recording material P is conveyed to a fixing device 21. The fixing device 21 fixes the developer image on the recording material P by heating and pressing the recording material P. After the developer image is fixed, the recording material P is discharged outside of the image forming apparatus 1 by a discharging roller pair 22. Note that the roller pairs including the conveyance roller pair 6 and the discharging roller pair 22 are configured as a roller unit.

The image forming apparatus 1 includes a transmitting unit 31 that transmits an ultrasonic wave and a receiving unit 71 that receives a sonic wave including an ultrasonic wave. Note that the transmitting unit 31 and the receiving unit 71 are respectively arranged on sides opposite to each other relative to the conveyance path of the recording material P, and the ultrasonic wave that has been transmitted from the transmitting unit 31 and has passed through the conveyance path of the recording material P is received by the receiving unit 71. For example, the transmitting unit 31 includes a piezoelectric element, which is a mutual converting element between a mechanical displacement and an electric signal. Also, the receiving unit 71 includes a MEMS (Micro Electro Mechanical System) microphone that converts the vibration displacement of a diaphragm due to pressure to a change in voltage, and outputs the voltage. Note that, if both of an ultrasonic wave and a sonic wave in an audible range are allowed to be received, a microphone, other than the MEMS microphone, such as a condenser microphone can also be used.

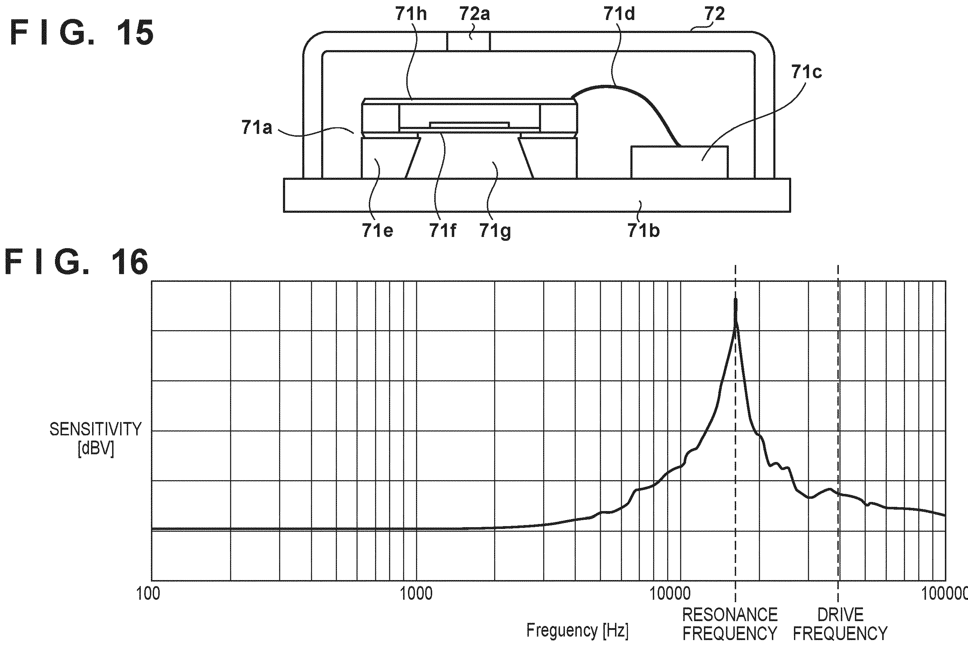

FIG. 15 is a cross-sectional view illustrating an example of the MEMS microphone in the receiving unit 71. A MEMS chip 71a and an amplifier circuit 71c are provided on a substrate 71b. The MEMS chip 71a and the amplifier circuit 71c are shielded by a shield case 72. Note that the shield case 72 is provided with a sound hole 72a for taking in a sonic wave from the outside. The MEMS chip 71a and the amplifier circuit 71c are electrically connected by a wire 71d. The MEMS chip 71a includes a vibrating membrane 71f formed above a silicon substrate 71e and a back electrode 71h that is provided so as to oppose the vibrating membrane 71f and includes a plurality of sound holes. The vibrating membrane 71f and the back electrode 71h that oppose each other form a capacitor. Note that a cavity 71g is provided in the silicon substrate 71e, and the vibrating membrane 71f is provided so as to cover the cavity 71g. A sonic wave enters through the sound hole 72a provided in the shield case 72, the vibrating membrane 71f vibrates, and an electric signal corresponding to the vibrating state is output. Specifically, the back electrode 71h converts the change in capacitance, of the capacitor formed between the vibrating membrane 71f and the back electrode 71h, that is caused by the vibration of the vibrating membrane 71f to the electric signal. The electric signal is subjected to amplification processing by the amplifier circuit 71c, and is output to the outside of the MEMS microphone.

FIG. 16 shows an illustrative frequency characteristic of the receiving unit 71 of the present embodiment. The horizontal axis in FIG. 16 shows the frequency of an input sonic wave, and the vertical axis shows the sensitivity. In the example in FIG. 16, the receiving unit 71 has a resonance frequency of about 15 kHz. However, the receiving unit 71 is sensitive in a frequency zone other than the resonance frequency, and can detect a sonic wave in a frequency zone other than the resonance frequency. That is, the receiving unit 71 can be used in a frequency band other than the resonance frequency, at which the output converges in a relatively short period of time.

Returning to FIG. 1, the control unit 3 includes a CPU 80 that performs overall control on the image forming apparatus 1. Also, the control unit 3 includes a basis weight detection control unit 30 and an abnormal sound determination control unit 70, which will be described later. Note that the abnormal sound determination control unit 70 may be provided in a processing system or an apparatus that can communicate with the image forming apparatus 1 via a network, instead of being provided inside the image forming apparatus 1.

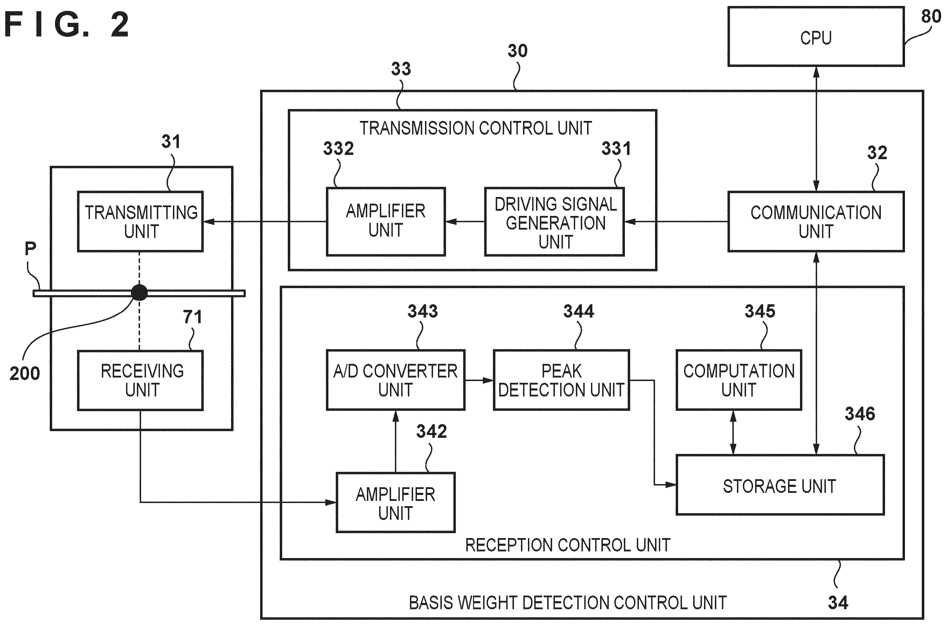

FIG. 2 is a block diagram of the basis weight detection control unit 30. Note that the basis weight is a mass per unit area of the recording material P, and the unit is [g/m²]. A driving signal generation unit 331 of a transmission control unit 33 generates a driving signal based on an instruction from the CPU 80 that is received via a communication unit 32. An amplifier unit 332 amplifies the driving signal generated by the driving signal generation unit 331, and outputs the amplified driving signal to the transmitting unit 31. With this, the transmitting unit 31 transmits an ultrasonic wave. The ultrasonic wave transmitted from the transmitting unit 31 is received by the receiving unit 71.

The receiving unit 71 outputs a voltage corresponding to the level of the received ultrasonic wave. An amplifier unit 342 of a reception control unit 34 amplifies the voltage input from the receiving unit 71, and outputs the amplified voltage to an A/D converter unit 343. The A/D converter unit 343 converts the voltage from the amplifier unit 342 to a digital signal. A peak detection unit 344 detects a peak value (maximum value) of values of the input digital signal, and saves the detected peak value in a storage unit 346. Note that the peak detection unit 344 saves the peak values in a state in which the recording material P is not present at a detection position 200 between the transmitting unit 31 and the receiving unit 71 and in a state in which the recording material P is present at the detection position 200 in the storage unit 346. Whether the recording material P is present or not is notified from the CPU 80 via the communication unit 32. A computation unit 345 calculates an attenuation coefficient from the ratio between the peak value in a state in which the recording material P is not present and the peak value in a state in which the recording material P is present, which are saved in the storage unit 346, and stores the attenuation coefficient into the storage unit 346. The attenuation coefficient indicates a degree of attenuation of an ultrasonic wave by the recording material P, and because the degree of attenuation differs depending on the basis weight, the basis weight of the recording material P can be determined from the attenuation coefficient. The CPU 80 acquires the attenuation coefficient from the storage unit 346 via the communication unit 32, and determines the basis weight of the recording material P. Also, the CPU 80 controls the image forming condition when an image is formed on a recording material P based on the determined basis weight of the recording material P. The image forming condition to be controlled includes a conveyance speed of the recording material P, a secondary transfer bias, a fixing temperature of the fixing device 21, and the like.

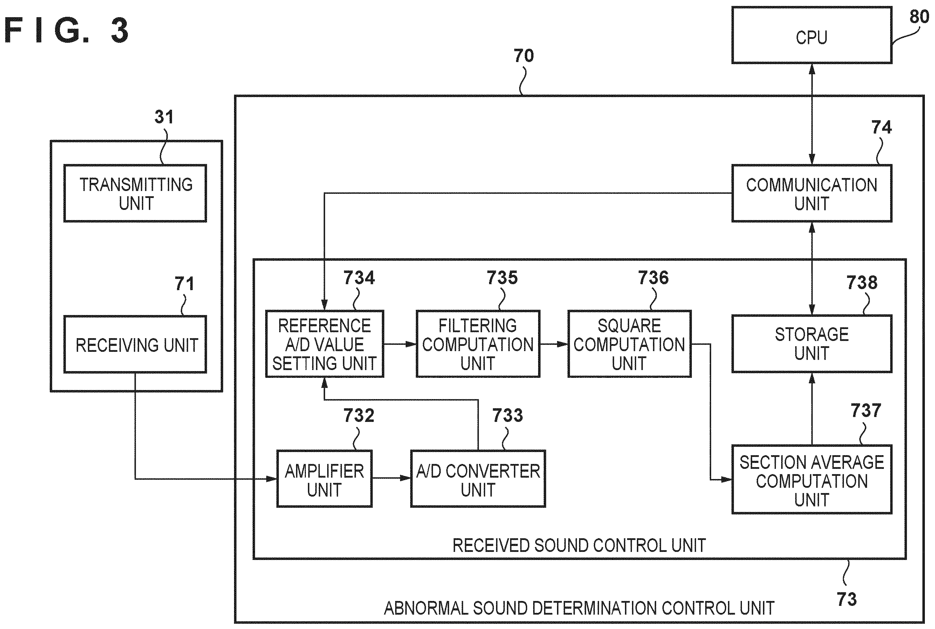

FIG. 3 is a block diagram of the abnormal sound determination control unit 70. For example, the receiving unit 71, which is a MEMS microphone, outputs, when not only an ultrasonic wave but also a sonic wave in an audible range has been received, a voltage indicating the level of a received sonic wave, as described above. That is, the receivable range of the receiving unit 71 of the present embodiment includes an ultrasonic wave and a sonic wave in an audible range. Therefore, the receiving unit 71 can also detect an internal operating sound when the image forming apparatus 1 is operating. An amplifier unit 732 of a received sound control unit 73 amplifies the voltage indicating the level of a sonic wave that is output from the receiving unit 71, and an A/D converter unit 733 converts the voltage output from the amplifier unit 732 to a digital signal. The voltage output from the receiving unit 71 is a positive value, and therefore only a sound component due to pressure change needs to be extracted by removing a DC component. Therefore, a reference A/D value setting unit 734 extracts only a sound component due to pressure change by subtracting a reference value from values indicated by the digital signal that is input from the A/D converter unit 733. Note that the reference value is notified from the CPU 80 via the communication unit 74.

A filtering computation unit 735 performs filtering processing by applying a filter in order to extract a frequency component suitable for determining a specific sound (hereinafter, referred to as an "abnormal sound") from the digital signal from which a DC component has been removed by the reference A/D value setting unit 734. Note that the filtering computation unit 735 has a plurality of filters that are to be applied to a plurality of abnormal sounds to be determined, and performs filtering processing using the filter notified by the CPU 80. A square computation unit 736 performs a square computation on the digital signal subjected to the filtering processing, and a section average computation unit 737 performs a section average computation on the digital signal subjected to the square computation. For example, the time period for which a section average computation is performed is 100 ms. The time length for which the section average computation is performed may be the same regardless of the abnormal sound to be determined, or different in accordance with the abnormal sound to be determined. As a result of performing the square computation and the section average computation, the magnitude of a sound can be easily compared when an abnormal sound is determined. The section-averaged signal is stored in a storage unit 738 as a signal level L of the received sound. The CPU 80 acquires the signal level L from the storage unit 738 via the communication unit 74, and determines whether or not an abnormal sound is occurring. The CPU 80, upon determining that an abnormal sound is occurring, performs processing in accordance with the determined abnormal sound.

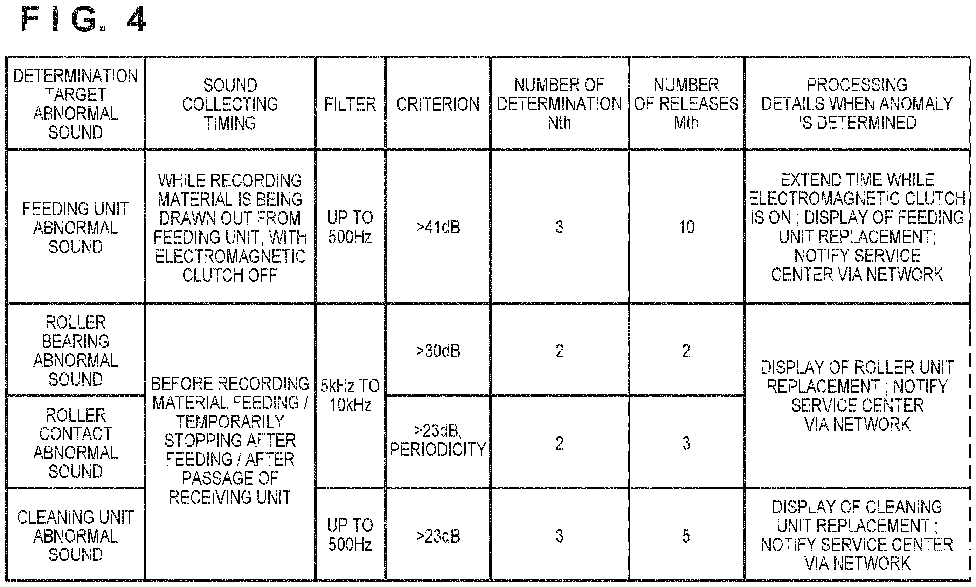

FIG. 4 shows determination information that is retained in the control unit 3 in advance. The CPU 80 determines an abnormal sound in accordance with the determination information. In the determination information shown in FIG. 4, abnormal sounds occurring in the feeding unit, a roller bearing of a roller of the roller unit, a roller contact of the roller of the roller unit, and the cleaning unit 36 are determination targets. In the following, the abnormal sounds are respectively referred to as a feeding unit abnormal sound, a roller bearing abnormal sound, a roller contact abnormal sound, and a cleaning unit abnormal sound. In the determination information, the sound collecting timing indicates a timing at which the abnormal sound is determined. For example, when the feeding unit abnormal sound is determined, the receiving result of the receiving unit 71 while the electromagnetic clutch for rotationally driving the feeding roller 4 is in an OFF state, and a recording material P is drawing out from the feeding unit by the conveyance roller pair 6 is used. Note that, when the electromagnetic clutch is in an OFF state, transmission of a driving force to the feeding roller 4 is cut off. Also, when the roller bearing abnormal sound, the roller contact abnormal sound, and the cleaning unit abnormal sound are determined, the receiving result of the receiving unit 71 before a recording material P is fed to the conveyance path or while a recording material P temporarily stops after the recording material P has been fed is used. That is, in this example, when the roller bearing abnormal sound, the roller contact abnormal sound, and the cleaning unit abnormal sound are determined, the receiving result of the receiving unit 71 while, although rollers are rotating, a recording material P is not being conveyed in the conveyance path is used. Note that, as shown in FIG. 4, if the conveyance sound of a recording material P after passing a position opposing the receiving unit 71 decreases below the abnormal sound to be determined by a predetermined value or more, the receiving result after the tail end of the recording material P has passed the position opposing the receiving unit 71 can be used. In this manner, the determination information indicates a correspondence relationship between the abnormal sounds of determination targets (or members causing abnormal sounds) and the operating states of the image forming apparatus. Also, the CPU 80 determines whether the abnormal sound of a determination target is occurring based on the receiving result of the receiving unit 71 when the image forming apparatus is in an operating state corresponding to the abnormal sound of the determination target. Note that, in order to accurately determine an abnormal sound, the CPU 80 stops transmission of an ultrasonic wave from the transmitting unit 31 while the receiving unit 71 is collecting sounds for determining the abnormal sound.

Also, the abnormal sounds shown in FIG. 4 are examples, and an abnormal sound from any member can be a determination target. For example, abnormal sounds from the photoconductive member 11 and other rollers such as the driving roller 18 can be determination targets. A configuration can be adopted in which a roller bearing abnormal sound and a roller contact abnormal sound are separately determined with respect to the abnormal sounds from other rollers. Note that the sound collecting timing can be, similarly to the roller bearing abnormal sound and the roller contact abnormal sound shown in FIG. 4, in a period while a recording material P is not conveyed in the conveyance path or in a period while the conveyance sound of a recording material P is smaller than the abnormal sound of a determination target by a predetermined value or more.

Also, the determination information also indicates a filter to be used by the filtering computation unit 735 in order to determine the abnormal sound of a determination target. In the example in FIG. 4, a filter is specified by its pass band. For example, when the feeding unit abnormal sound and the cleaning unit abnormal sound are determined, the filtering computation unit 735 uses a low pass filter whose pass band is 500 Hz or less. Also, when the roller bearing abnormal sound and the roller contact abnormal sound are determined, the filtering computation unit 735 uses a bandpass filter whose pass band is from 5 kHz to 10 kHz. Moreover, the determination information shows, for each determination target, a criterion of the abnormal sound, a number of determinations Nth, and a number of releases Mth. Note that the meanings of these values will be described in a later-described abnormal sound determination processing. Also, the "processing details when an anomaly is determined" in the table shown in FIG. 4 shows processing to be performed by the CPU 80 when it is determined that the corresponding abnormal sound is occurring.

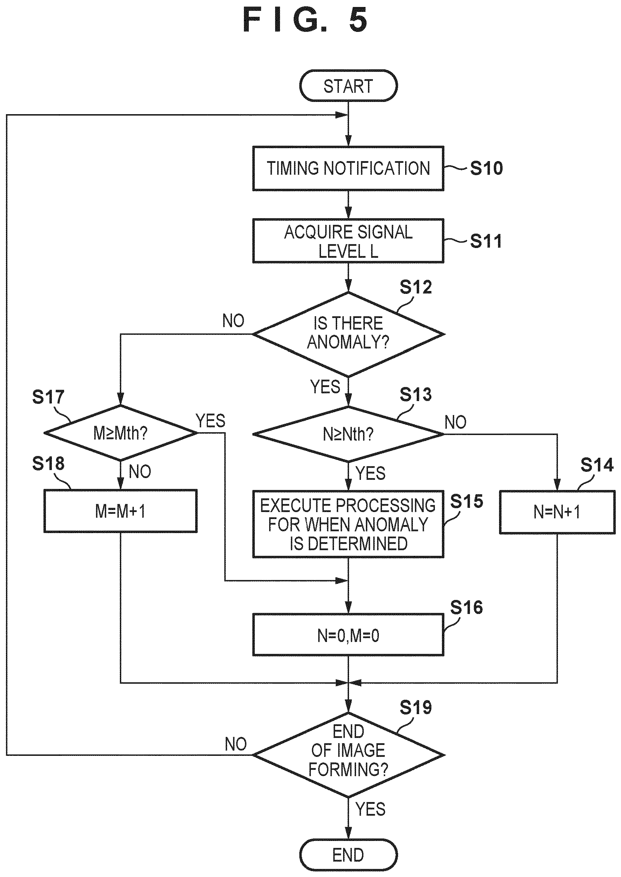

FIG. 5 is a flowchart of the abnormal sound determination processing according to the present embodiment. In step S10, the CPU 80 selects an abnormal sound to be determined, and notifies the abnormal sound determination control unit 70 of the receiving timing (period) of the receiving unit 71 for determining the selected abnormal sound. Note that, in step S10, the CPU 80 also notifies the abnormal sound determination control unit 70 of the filter to be used to determine the selected abnormal sound, the reference value to be used by the reference A/D value setting unit 734, and the like. With this, the abnormal sound determination control unit 70 obtains a signal level L at the notified receiving timing, and stores the signal level L into the storage unit 738. In step S11, the CPU 80 acquires the signal level L from the storage unit 738.

In step S12, the CPU 80 determines whether or not the signal level L is anomalous based on the criterion shown in FIG. 4. For example, in FIG. 4, the criterion of the feeding unit abnormal sound is that the signal level L is larger than 41 dB. Therefore, if the signal level L acquired in step S11 is larger than 41 dB, "Yes" is determined in step S12, and if the signal level L acquired in step S11 is 41 dB or less, "No" is determined in step S12. When the roller bearing abnormal sound and the cleaning unit abnormal sound are determined, whether or not the signal level L is anomalous is determined by comparing the signal level L with a threshold value. On the other hand, when the roller contact abnormal sound is determined, whether or not the change in signal level L over time has periodicity is determined in addition to the comparison between the signal level L and a threshold value. That is, if the signal level L is larger than 23 dB, which is the threshold value, and increases and decreases at a predetermined period, "Yes" is determined in step S12, and in other cases, "No" is determined in step S12.

If it is determined that the signal level L is anomalous in step S12, the CPU 80 determines whether a counter N is a threshold value Nth or more in step S13. The threshold value Nth is shown in the "number of determinations" in FIG. 4. If the counter N is not the threshold value Nth or more, in step S14, the CPU 80 increments the counter N by one and advances the processing to step S19. On the other hand, if the counter N is the threshold value Nth or more, the CPU 80 determines that an abnormal sound of the determination target is occurring, and executes processing corresponding to the anomaly determined to be occurring, in step S15. The processing to be performed in step S15 is shown in the "processing details when the anomaly is determined" in FIG. 4. Thereafter, in step S16, the CPU 80 initializes the counters N and M to 0, and advances the processing to step S19.

On the other hand, if it is determined that the signal level L is not anomalous in step S12, the CPU 80 determines, in step S17, whether the counter M is a threshold value Mth or more. The threshold value Mth is shown in the "number of releases" in FIG. 4. If the counter M is not the threshold value Mth or more, in step S18, the CPU 80 increments the counter M by one and advances the processing to step S19. On the other hand, if the counter M is the threshold value Mth or more, in step S16, the CPU 80 initializes the counters N and M to 0, and advances the processing to step S19.

In step S19, the CPU 80 determines whether the image formation is ended, and if the image formation is not ended, repeats the processing from step S10. On the other hand, if the image formation is ended, the CPU 80 ends the processing in FIG. 5. Note that the counter N is not initialized to 0 when the image formation is ended, and retains its value. That is, the counter N is initialized to 0 only in step S16. Note that the counter M may be configured to be initialized to 0 when the image formation is ended, or may be configured to be initialized to 0 only in step S16, similarly to the counter N.

Note that, a configuration may be adopted in which the CPU 80 normally selects the abnormal sound to be determined successively from the table in FIG. 4 downward from the first row, and when "Yes" is determined in step S12, selects the abnormal sound, which is selected at this time, a plurality of times continuously, and determines whether or not the abnormal sound is occurring, for example. Also, the configuration may also be such that the CPU 80 determines the degrees of deterioration of replacement components based on the time period elapsed since the start of usage of each replacement component, selects frequently the abnormal sound from the replacement component whose degree of deterioration is high, and determines whether or not the abnormal sound is occurring.

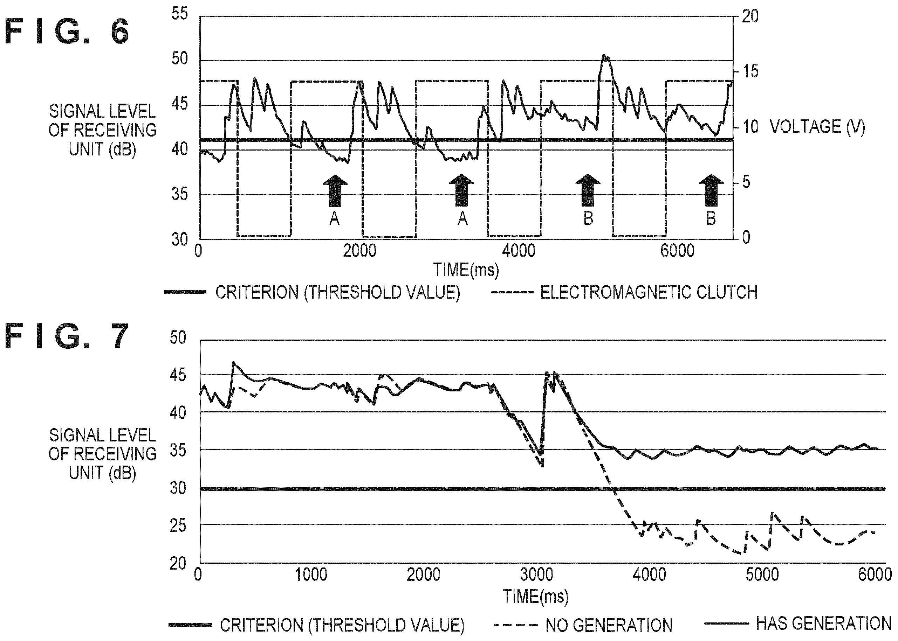

FIG. 6 shows the signal level L of a sound from the feeding unit. The dotted line in FIG. 6 shows the state of the electromagnetic clutch, and when the voltage of the electromagnetic clutch (vertical axis on the right side in FIG. 6) is 0 V, the electromagnetic clutch is in an ON state, and when the voltage is 14 V, the electromagnetic clutch is in an OFF state. When the electromagnetic clutch is turned on, a recording material P is fed. Therefore, FIG. 6 shows the signal level L while four recording materials P are being fed. Also, the thick line in the graph in FIG. 6 indicates 41 dB, which is a threshold value.

The feeding unit abnormal sound occurs because the surfaces of the feeding roller 4 and the separation roller 5 are worn away due to the feeding of the recording materials P. When a recording material P is drawn out by the downstream conveyance roller pair 6 in a state in which the electromagnetic clutch is turned off and the rotational driving of the feeding roller 4 is stopped, a vibration may occur in the separation roller 5 that rotates due to drawing out of the recording material P. This vibration causes vibration in the separation roller 5 and the recording material P, and as a result, an abnormal sound is generated. Therefore, the generation of the feeding unit abnormal sound is determined based on the sound received by the receiving unit 71 in a period in which the electromagnetic clutch is in an OFF state, and a recording material P is being drawn out from the feeding unit by the conveyance roller pair 6. The arrows A in FIG. 6 indicate timings at which the signal level L is a threshold value or less, and the arrows B indicate timings at which the signal level L is larger than the threshold value. From the determination information in FIG. 4, if it has been determined that the signal level L is larger than the threshold value three times, the CPU 80 determines that the feeding unit abnormal sound is occurring. In this case, as shown in FIG. 4, the CPU 80 performs control so as to reduce the generation of the abnormal sound, specifically, to reduce the time period in which the abnormal sound occurs, by extending the time period in which the electromagnetic clutch is in an ON state. Also, as shown in FIG. 4, the CPU 80 performs control to notify a user by displaying a message for prompting the user to replace the feeding unit in an unshown display unit, or reports the state to a service center or the like via a network.

FIG. 7 shows the signal level L of a sound from the roller unit when the roller bearing abnormal sound is determined. The roller bearing abnormal sound is generated due to a bearing been ground as a result of the bearing and a roller slide each other. In this example, while a recording material P is being conveyed, the conveyance sound is large, and the roller bearing abnormal sound is not discernible. Therefore, the generation of the roller bearing abnormal sound is determined based on a receiving result in a period in which a recording material P is not present in the conveyance path, or a recording material P temporarily stops after the recording material P being fed. Note that FIG. 7 shows the signal level L of a sound collected before and after a recording material P is discharged from the conveyance path, and the recording material P is discharged at a point in time of about 3800 ms. Note that after the recording material P is discharged, the roller of the roller unit is rotating. In the graph in FIG. 7, the solid line indicates the signal level L when an abnormal sound is generated, and the dotted line indicates the signal level L when an abnormal sound is not generated. Note that the thick line in FIG. 7 indicates 30 dB, which is a threshold value. Note that, as described above, even if a recording material P is being conveyed, if the conveyance sound is less than the level of the abnormal sound to be determined by a predetermined value or more, the abnormal sound can be determined based on the receiving result of the receiving unit 71 in this period. For example, the abnormal sound can be determined based on the receiving result of the receiving unit 71 after the tail end of a recording material P has passed through a position opposing the receiving unit 71.

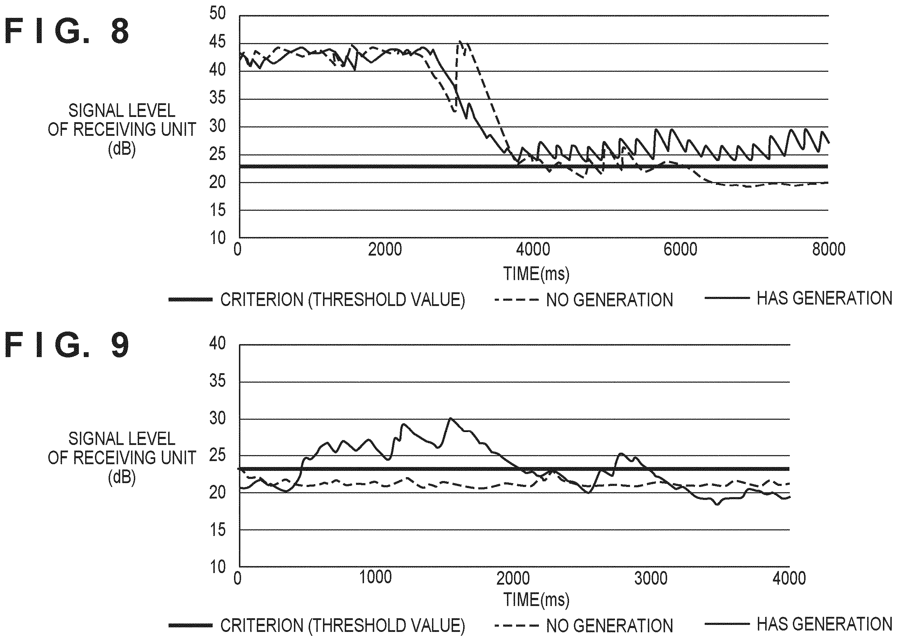

FIG. 8 shows the signal level L of a sound from the roller unit when the roller contact abnormal sound is determined. Note that the roller contact is an earth contact for preventing a roller having a metal shaft from being charged. The roller contact abnormal sound is generated as a result of a wire spring being worn away at a contact portion between the roller shaft and the metal wire spring. The roller contact abnormal sound is also determined, similarly to the roller bearing abnormal sound, based on the receiving result of the receiving unit 71 in a period in which the conveyance sound of a recording material P does not occur, or the conveyance sound of a recording material P is smaller than the roller bearing abnormal sound by a predetermined value or more. Note that FIG. 8 shows the signal level L of a sound collected before and after a recording material P is discharged from the conveyance path, and the recording material P is discharged at a point in time of about 4000 ms. In the graph in FIG. 8, the solid line indicates the signal level L when the abnormal sound is generated, and the dotted line indicates the signal level L when the abnormal sound is not generated. Note that the thick line in FIG. 8 indicates 23 dB, which is a threshold value. Also, as shown in FIG. 8, the roller contact abnormal sound, which is also called as "roller contact squeaking sound" occurs periodically. Therefore, as shown in FIG. 4, the periodicity of the signal level L is also used to determine the generation of the abnormal sound.

FIG. 9 shows the signal level L of a sound from the cleaning unit. When the intermediate transfer belt 17 is worn out and its surface property has changed, the sliding resistance between the cleaning blade 35 of the cleaning unit 36 and the intermediate transfer belt 17 changes, and as a result an abnormal sound from the cleaning unit 36 occurs. This abnormal sound is also not discernible if the conveyance sound of a recording material P is present. Therefore, the acquisition timing of the sound is in a period in which the conveyance sound of a recording material P is not occurring, or in a period in which the conveyance sound of a recording material P is smaller than the abnormal sound by a predetermined value or more. Note that FIG. 9 shows the signal level L of a sound collected before a recording material P is being fed. In the graph in FIG. 9, the solid line indicates the signal level L when the abnormal sound is occurring, and the dotted line indicates the signal level L when the abnormal sound is not occurring. Note that the thick line in FIG. 9 indicates 23 dB, which is a threshold value.

As described above, the states of members of the image forming apparatus 1 are determined by utilizing the receiving unit 71 that is used to detect the basis weight of a recording material P. Specifically, it is determined whether or not a member is generating an abnormal sound while being in operation. As a result of determining an abnormal sound using the receiving unit 71 for basis weight detection that is generally provided in an image forming apparatus, the number of components to be added for determining an abnormal sound can be reduced, and the cost of the image forming apparatus 1 can be reduced. Also, the size of the image forming apparatus 1 can be reduced.

Note that, in FIG. 1, the transmitting unit 31 and the receiving unit 71 are arranged between the conveyance roller pair 6 and the secondary transfer roller 19, in the conveyance direction of the recording material P, but the transmitting unit 31 and the receiving unit 71 can also be arranged between the feeding roller 4 and the conveyance roller pair 6. As a result of arranging the receiving unit 71 close to the feeding unit, the accuracy of detecting the abnormal sound of the feeding unit can be improved.

Also, in the present embodiment, the CPU 80 selects the determination target abnormal sound. However, the configuration may be such that, instead of setting a specific abnormal sound as the determination target, the receiving unit 71 continuously collects sounds, and the CPU 80 determines the occurrences of the abnormal sounds and the positions at which the abnormal sounds are occurring by performing computations in accordance with the respective determination target abnormal sounds on the receiving result of the receiving unit 71. Moreover, in the present embodiment, an abnormal sound is detected by utilizing the receiving unit 71 that is used to detect the basis weight, which is a parameter for specifying the type of a recording material P. However, a configuration may also be adopted in which an abnormal sound is detected by utilizing a receiving unit 71 that is used to detect another parameter for specifying the type of a recording material P, e.g. the thickness. More generally, the configuration may be such that an abnormal sound is detected by utilizing a receiving unit 71 that receives sounds for detecting the type of a recording material P.

Also, the threshold values for the respective determination target abnormal sounds can be determined in advance. Moreover, the configuration can also be such that the receiving unit 71 is caused to receive sonic waves in an initial stage of the operation of the image forming apparatus, and the threshold values are determined based on the received result.

### Second embodiment

Next, a second embodiment will be described focusing on the difference from the first embodiment. If a driving unit including motors for driving rollers is used over its lifetime in an image forming apparatus, a problem may occur such as an image failure due to grinding of gears, depletion of grease, or the like in the driving unit. In this case, the driving unit needs to be replaced. In the present embodiment, the driving unit that is used over its lifetime is determined by a sonic wave occurring in the driving unit.

When grinding of gears, depletion of grease, or the like occurs in the driving unit, the sound from the driving unit gradually increases such that a user does not feel the sound as an uncomfortable abnormal sound. In the present embodiment, the number of recording materials P on which images are formed is stored in an unshown storage unit in the control unit 3. If the number of recording materials P stored in the storage unit reaches a predetermined number, e.g. 10000, the control unit 3 independently drives each driving unit. In this example, the image forming apparatus is assumed to include a feeding driving unit for driving the feeding roller 4 and the like, an image forming driving unit for driving an image formation unit, and a fixing driving unit that drives the fixing device 21 and the like. Note that the image formation unit includes at least one of the photoconductive member 11, the charging roller 12, the developing device 14, the intermediate transfer belt 17, and the cleaning unit 36. In this case, the control unit 3 successively drives the feeding driving unit, the image forming driving unit, and the fixing driving unit. That is, the control unit 3 performs control such that two or more of the driving units of the three driving units are not driven at the same time. Then, the abnormal sound determination control unit 70 stores the signal level L of a received sound that is created based on sonic waves received by the receiving unit 71 in a state in which only one driving unit is being driven, similarly to the first embodiment.

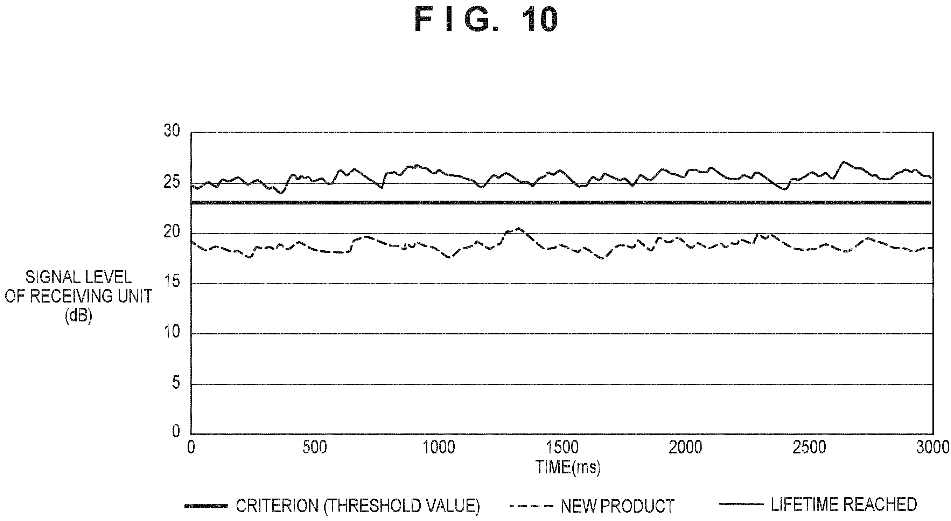

FIG. 10 shows the signal level L of a sound from the feeding driving unit. The dotted line in the diagram indicates the signal level L of the feeding driving unit when the feeding driving unit has started to be used, and the solid line indicates the signal level L of the feeding driving unit when the feeding driving unit has reached its lifetime. The criterion for determining the replacement timing of the feeding driving unit is set to 23 dB indicated by the thick line. As shown in FIG. 10, because the signal level L of the feeding driving unit that has reached its lifetime continuously exceeds 23 dB, which is the criterion, it can be determined that replacement is needed. The control unit 3, upon determining that it is a replacement timing of the feeding driving unit, performs control to notify a user by displaying a message in an unshown display unit, or reports that replacement is needed to a service center or the like via a network.

As described above, the states of the members of the image forming apparatus 1 are determined utilizing the receiving unit 71 that is used to detect the basis weight of a recording material P. Specifically, it is determined whether or not a member has reached a predetermined lifetime. With this, similarly to the first embodiment, the number of components to be added for determining the states of the members can be reduced, and the cost of the image forming apparatus 1 can be reduced. Also, the size of the image forming apparatus 1 can be reduced.

### Third embodiment

Next, a third embodiment will be described focusing on the difference from the first embodiment. As described above, when a recording material P is fed to the conveyance path, the recording materials P are separated sheet by sheet by the separation roller 5. However, so-called double feed, which is a phenomenon in which the separation roller 5 does not function and a plurality of recording materials P are fed in an overlaid state, may occur when sheets are conveyed. Therefore, the image forming apparatus 1 is provided with a function of detecting the double feed. In the present embodiment, the occurrence of an abnormal sound is determined utilizing a receiving unit used for detecting this double feed.

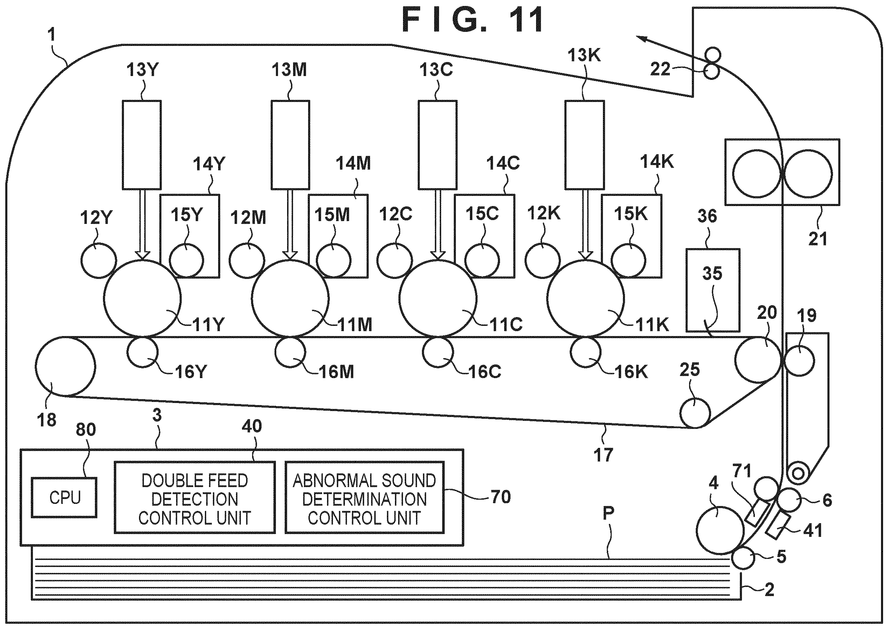

FIG. 11 is a configuration diagram of an image forming apparatus according to the present embodiment. Note that the constituent elements similar to those of the image forming apparatus in FIG. 1 are given the same reference signs, and the description thereof will be basically omitted. A transmitting unit 41 transmits an ultrasonic wave. A receiving unit 71 is similar to that in the first embodiment. Note that the transmitting unit 41 and the receiving unit 71 are respectively arranged on sides opposite to each other relative to the conveyance path. In the present embodiment, the transmitting unit 41 and the receiving unit 71 are provided between a feeding roller 4 and a conveyance roller pair 6 in a conveyance direction of the recording material P. Also, the control unit 3 includes a double feed detection control unit 40.

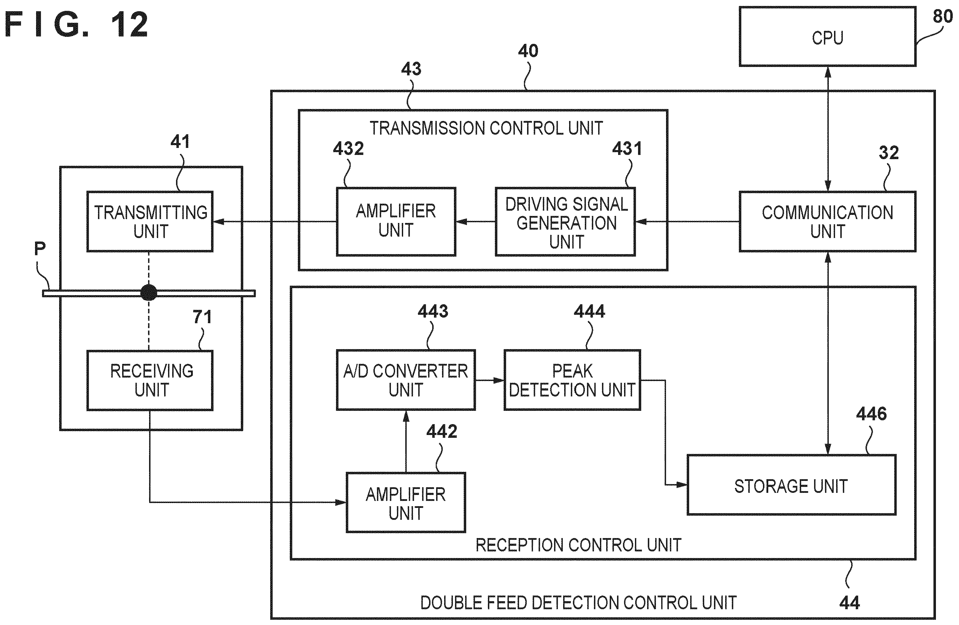

FIG. 12 is a block diagram of the double feed detection control unit 40. A driving signal generation unit 431 of a transmission control unit 43 generates a driving signal based on an instruction from a CPU 80 that is received via a communication unit 32. An amplifier unit 432 amplifies the driving signal generated by the driving signal generation unit 431, and outputs the amplified driving signal to the transmitting unit 41. With this, the transmitting unit 41 transmits an ultrasonic wave. The ultrasonic wave transmitted from the transmitting unit 41 is received by the receiving unit 71.

The receiving unit 71 outputs a voltage corresponding to the level of the ultrasonic wave received through a recording material P. An amplifier unit 442 of a reception control unit 44 amplifies a voltage input from the receiving unit 71, and outputs the amplified voltage to an A/D converter unit 443. The A/D converter unit 443 converts the voltage from the amplifier unit 442 to a digital signal, and outputs the digital signal to a peak detection unit 444. The peak detection unit 444 detects a peak value (maximum value) of values of the input digital signal, and saves the detected peak value in a storage unit 446. The CPU 80 acquires a peak value from the storage unit 446 via the communication unit 32, and compares the peak value with a reference peak value. The reference peak value is a peak value when there is one recording material P, and is measured and stored in the control unit 3 in advance. When the double feed is not occurring, the difference between the peak value acquired from the storage unit 446 and the reference peak value is small. On the other hand, if the double feed is occurring, the level of ultrasonic wave received by the receiving unit 71 decreases. Therefore, when the double feed is occurring, the difference between the peak value acquired from the storage unit 446 and the reference peak value is large. Therefore, the CPU 80 can determine whether or not the double feed is occurring based on whether or not the difference between the peak value acquired from the storage unit 446 and the reference peak value is larger than a threshold value.

Note that the method of determining a specific sound utilizing the receiving unit 71 is similar to those of the first and second embodiments, and therefore the description thereof will be omitted.

As described above, as a result of determining the states of the members utilizing the receiving unit 71 that is used to detect the double feed, which is a state of the recording materials P, the number of components can be reduced, and the reduction in size of the image forming apparatus can be realized. As a result, the cost of the image forming apparatus 1 can be reduced.

### Fourth embodiment

In the first embodiment, the basis weight detection control unit 30 is provided with the amplifier unit 342 and the A/D converter unit 343, and the abnormal sound determination control unit 70 is provided with the amplifier unit 732 and the A/D converter unit 733. In the present embodiment, an amplifier unit and an A/D converter unit are shared between the control units.

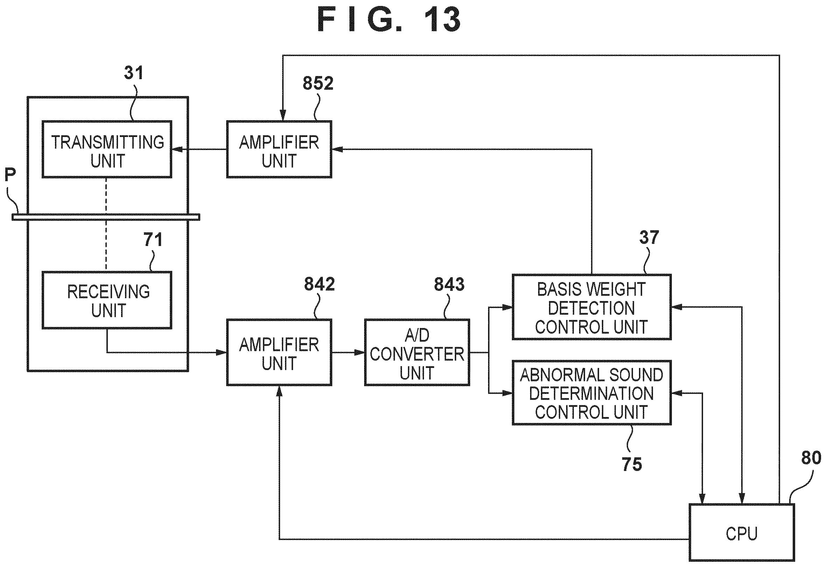

FIG. 13 is a control configuration diagram relating to basis weight detection and abnormal sound determination according to the present embodiment. A basis weight detection control unit 37 is equivalent to the basis weight detection control unit 30 in FIG. 2 from which the amplifier units 332 and 342 and the A/D converter unit 343 are removed. Note that an amplifier unit 852 is provided in FIG. 13 in place of the amplifier unit 332 in FIG. 2. Also, an amplifier unit 842 and an A/D converter unit 843 are provided in FIG. 13 in place of the amplifier unit 342 and the A/D converter unit 343 in FIG. 2. Also, an abnormal sound determination control unit 75 is equivalent to the abnormal sound determination control unit 70 in FIG. 3 from which the amplifier unit 732 and the A/D converter unit 733 are removed. Note that the amplifier unit 842 and the A/D converter unit 843 are provided in FIG. 13 in place of the amplifier unit 732 and the A/D converter unit 733 in FIG. 3. That is, the amplifier unit 842 and the A/D converter unit 843 in the present embodiment are respectively obtained by commonizing the amplifier unit 342 and the amplifier unit 732 in the first embodiment and commonizing the A/D converter unit 343 and the A/D converter unit 733 in the first embodiment. The A/D converter unit 843 is configured to be able to output a digital signal to both of the basis weight detection control unit 37 and the abnormal sound determination control unit 75.

When the basis weight is detected, the CPU 80 instructs the basis weight detection control unit 37 to transmit an ultrasonic wave. With this, the basis weight detection control unit 37 outputs a driving signal. The amplifier unit 852 amplifies the driving signal, and outputs the amplified driving signal to the transmitting unit 31. Note that the amplification factor of the amplifier unit 852 is set by the CPU 80. Also, when the basis weight is detected, the CPU 80 sets a preset first amplification factor suitable for detecting the basis weight to the amplifier unit 842. The A/D converter unit 843 digitally converts the voltage from the amplifier unit 842 that has been amplified with the first amplification factor, and outputs the digitally converted voltage to the basis weight detection control unit 37. The processing in the basis weight detection control unit 37 thereafter is similar to that in the first embodiment.

When an abnormal sound is determined, the CPU 80 sets a preset second amplification factor suitable for determining the abnormal sound to the amplifier unit 842. Note that, because the level of the abnormal sound is larger than that of the ultrasonic wave, the second amplification factor is smaller than the first amplification factor. The A/D converter unit 843 digitally converts the voltage from the amplifier unit 842 that has been amplified with the second amplification factor, and outputs the digitally converted voltage to the abnormal sound determination control unit 75. The processing in the abnormal sound determination control unit 75 thereafter is similar to that in the first embodiment. Note that a configuration can be adopted in which the digital signal from the A/D converter unit 843 is constantly output to both of the basis weight detection control unit 37 and the abnormal sound determination control unit 75. Also, the configuration can be such that the digital signal from the A/D converter unit 843 is output to only one of the basis weight detection control unit 37 and the abnormal sound determination control unit 75 in accordance with whether the basis weight detection is to be performed or the determination of an abnormal sound is to be performed.

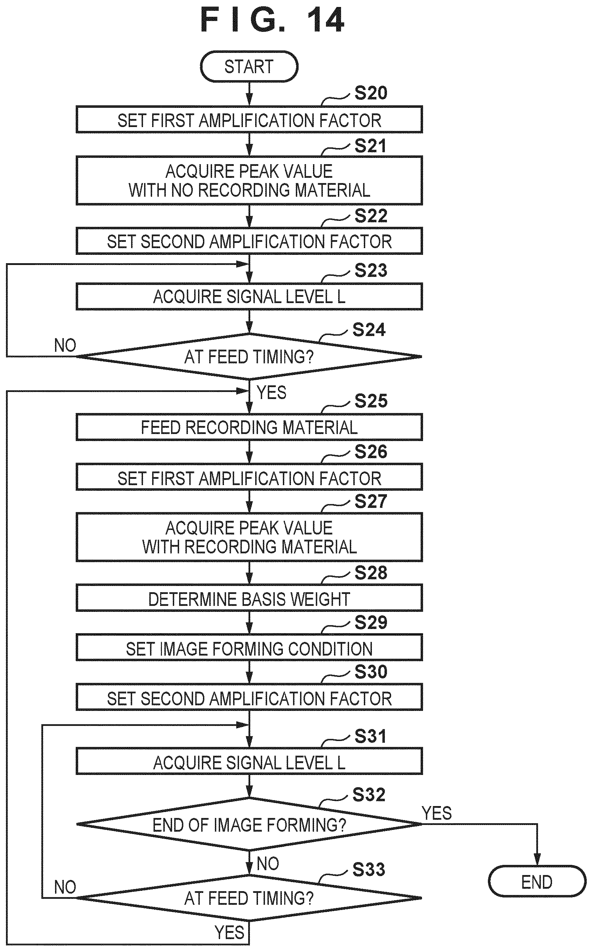

FIG. 14 is a flowchart of processing to be executed when the CPU 80 performs image formation, in the present embodiment. When the image formation is started, in step S20, the CPU 80 sets the first amplification factor to the amplifier unit 842 for detecting the basis weight. Also, in step S21, the CPU 80 causes basis weight detection control unit 37 to acquire a peak value in a state in which a recording material P is not present in a detection position 200. Upon the acquisition of the peak value by the basis weight detection control unit 37 being completed, in step S22, the CPU 80 sets the second amplification factor to the amplifier unit 842 for determining an abnormal sound, and in step S23, determines the abnormal sound by causing the abnormal sound determination control unit 75 to acquire the signal level L. In step S24, the CPU 80 determines whether the current time is a feed timing of a recording material P, and continues the processing in step S23 until the feed timing of the recording material P. In step S24, upon the feed timing of the recording material P being arrived, the CPU 80 feeds the recording material P in step S25. Thereafter, in step S26 that is executed at a predetermined timing before the recording material P reaches the detection position 200, the CPU 80 sets the first amplification factor to the amplifier unit 842 for detecting the basis weight. Note that, although not being described in FIG. 14, the CPU 80 can continue the acquisition of the signal level L and the determination of the abnormal sound until the first amplification factor is set to the amplifier unit 842 in step S26. Also, in step S27, the CPU 80 causes the basis weight detection control unit 37 to acquire a peak value in a state in which the recording material P is present at the detection position 200.

In step S28, the CPU 80 determines the basis weight of the recording material P based on the ratio of the peak value in a state in which the recording material P is not present at the detection position 200 and the peak value in a state in which the recording material P is present at the detection position 200. In step S29, the CPU 80 sets the image forming condition based on the determined basis weight. Thereafter, the CPU 80 sets, in step S30, the second amplification factor for abnormal sound determination to the amplifier unit 842, and performs, in step S31, determination of the abnormal sound by causing the abnormal sound determination control unit 75 to acquire the signal level L. In step S32, the CPU 80 determines whether the image formation is ended, that is, whether images have been formed on all the recording materials P in this image formation. Upon determining that the image formation has been ended, the CPU 80 ends the processing in FIG. 14. On the other hand, upon determining, in step S32, that the image formation has not been ended, the CPU 80 determines, in step S33, whether it is a feed timing of a recording material P. Upon determining that it is not a feed timing of the recording material P, the CPU 80 repeats the processing from step S31. On the other hand, upon determining that it is a feed timing of the recording material P, the CPU 80 repeats the processing from step S25.

As described above, in the present embodiment, as a result of the amplifier unit and the A/D converter unit being used in common between the basis weight detection and the determination of a specific sound, the number of components can be reduced relative to the configurations of the first and second embodiments. Therefore, the cost of the image forming apparatus can further be reduced. Note that the amplifier unit and the A/D converter unit can also be used in common between the double feed detection and the determination of a specific sound. With this, the number of components can be reduced relative to the configuration of the third embodiment, and the cost can be reduced. Note that a configuration may be adopted in which only the amplifier unit is used in common, and the A/D converter unit is not used in common.

### Other embodiments

The first embodiment and the third embodiment can also be combined. That is, a configuration may be adopted in which the receiving unit is shared between the basis weight detection and the double feed detection, and the basis weight, the double feed, and the specific sound are detected using one receiving unit. Also, the present invention can also be realized as a sheet conveyance apparatus that conveys sheets such as recording materials P. The sheet conveyance apparatus has a function of detecting the basis weight of a recording material P to be conveyed and/or a function of detecting the double feed. Also, the sheet conveyance apparatus performs determination of a specific sound using the receiving unit for detecting the basis weight of a recording material P and the double feed. Also, the sonic wave to be transmitted from the transmitting unit 31 may include components in an audible band.

Also, each of the amplifier units in the first to fourth embodiments may have a plurality of amplification factors. For example, the configuration may be such that when a sound having a high sound pressure is to be detected, a low amplification factor is selected, and when a sound having a low sound pressure is to be detected, a high amplification factor is selected. With this, appropriate amplification factors can be set to the amplifier units 732 and 842 in accordance with the member whose state is to be determined, specifically, the specific sound to be determined.

Also, some of the functions of the abnormal sound determination control unit 70, e.g., the functional blocks after the reference A/D value setting unit 734 can be provided in a processing system (processing apparatus) outside the image forming apparatus. That is, the present invention can be realized as an image forming system including the image forming apparatus 1 and a processing system that are connected via a network. In this case, the image forming apparatus 1 transmits information indicating the sound received by the receiving unit 71, e.g., a digital value, to the processing system via the network. Also, the processing system determines the signal level L based on the information received from the image forming apparatus 1, and determines the state of a member of the image forming apparatus 1, specifically, whether or not the member generates a specific sound based on the signal level L. Note that the specific sound is a sound generated when the member is failed or a sound generated when the member has reached a predetermined lifetime, for example. Therefore, in this case, the processing for determining the state of a member that is to be executed by the control unit 3 (or CPU 80) in the embodiments described above is to be performed by the processing system. Upon determining the member that generates a specific sound, the processing system notifies the image forming apparatus 1 or a service center of this fact. With this, the image forming apparatus 1 performs processing in accordance with the determined member and processing for notifying the user.

The processing system or processing apparatus outside the image forming apparatus can perform higher level processing than the image forming apparatus itself, e.g., fast Fourier transform and the like, and therefore can detect a specific sound at a higher accuracy. Also, the abnormal sound determination control unit 70 can also be realized by a circuit that realizes a specific function (e.g., ASIC). Also, when a processing system or a processing apparatus is provided outside the image forming apparatus, the processing in the processing system or the processing apparatus can be realized by a computer program. That is, the above-described processing for determining whether or not the specific sound is occurring in a member can be realized by one or more processors reading out and executing a program.

Embodiment(s)of the present invention can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiments and/or that includes one or more circuits (e.g., application specific integrated circuit (ASIC)) for performing the functions of one or more of the above-described embodiments, and by a method performed by the computer of the system or apparatus by, for example, reading out and executing the computer executable instructions from the storage medium to perform the functions of one or more of the above-described embodiments and/or controlling the one or more circuits to perform the functions of one or more of the above-described embodiments. The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to exemplary embodiments, it is to be understood that the invention is not limited to the disclosed exemplary embodiments.

## Claims

1. An image forming apparatus (1) comprising:
a plurality of members for forming an image;
transmitting means (31) adapted to transmit an ultrasonic wave;
receiving means (71) adapted to receive the ultrasonic wave that has been transmitted from the transmitting means (71) and has passed through a sheet (P) and an audible sound wave that is generated from at least one of the plurality of members, wherein the receiving means (71) is adapted to be able to receive both of the ultrasonic wave and the audible sound wave, and includes a micro electro mechanical system, MEMS, microphone, wherein the MEMS microphone includes:
a vibrating membrane (71f) that vibrates in accordance with a received ultrasonic wave and a received audible sound wave; and
an electrode (71h) that is provided so as to oppose the vibrating membrane (71f), and outputs a signal corresponding to a vibrating state of the vibrating membrane (71f), and
the MEMS microphone is adapted to convert a change in capacitance of a capacitor formed by the vibrating membrane (71f) and the electrode (71h) to an electric signal;
detection means (30, 40) adapted to detect information regarding a type or state of the sheet (P) based on the ultrasonic wave; and
determination means (70) adapted to determine a state of a member that has generated the audible sound wave based on the audible sound wave.

2. The image forming apparatus (1) according to claim 1, wherein the determination means (70) is adapted to determine the state of the member based on the audible sound wave generated when the transmitting means (31) does not transmit the ultrasonic wave.

3. The image forming apparatus according (1) to claim 1 or 2, wherein the determination means (70) is adapted to determine the state of the member based on the audible sound wave generated when the image forming apparatus (1) is in operation.

4. The image forming apparatus (1) according to any one of claims 1 to 3, wherein the determination means (70) is adapted to retain determination information indicating a correspondence relationship between a member whose state is to be determined and an operating state of the image forming apparatus (1), and to determine the state of the member whose state is to be determined using a receiving result of the receiving means (71) when the image forming apparatus (1) is in the operating state corresponding to the member, as a receiving result of the audible sound wave obtained by the receiving means (71).

5. The image forming apparatus (1) according to claim 4,
wherein the receiving means (71) is adapted to output a signal indicating a received audible sound wave, and
the determination information (70) is adapted to indicate a correspondence relationship between a member whose state is to be determined and a filter to be applied to the signal indicating the audible sound wave that the receiving means (71) has output.

6. The image forming apparatus (1) according to any one of claims 1 to 5, further comprising:
feeding means (4, 5) adapted to feed a sheet (P) stacked on a tray (2); and
conveyance means (6) adapted to convey the sheet (P) fed by the feeding means (4, 5) along a conveyance path,
wherein the determination means (70) is adapted, when a rotary drive force to the feeding means (4, 5) is cut off, to determine a state of the feeding means (4, 5) based on the audible sound wave generated when the sheet (P) to be conveyed by the conveyance means (6) is being drawn out from the feeding means (4, 5).

7. The image forming apparatus (1) according to claim any one of claims 1 to 5, further comprising:
conveyance means (6) adapted to convey a sheet (P) along a conveyance path; and
image formation means (11Y, 11M, 11C, 11K) adapted to form an image on the sheet (P) conveyed by the conveyance means (6),
wherein the determination means (70) is adapted to determine a state of the conveyance means (6) or the image formation means (11Y, 11M, 11C, 11K) based on the audible sound wave when the conveyance means (6) is rotating, but the conveyance means (6) is not conveying the sheet (P).

8. The image forming apparatus (1) according to any one of claims 1 to 5, further comprising:
conveyance means (6) adapted to convey a sheet (P) along a conveyance path; and
image formation means (11Y, 11M, 11C, 11K) adapted to form an image on the sheet P) conveyed by the conveyance means (6),
wherein the image formation means (11Y, 11M, 11C, 11K) includes an image carrier (17) on which the image to be transferred to the sheet (P) is formed, and a cleaning means (36) that is adapted to clean the image carrier (17), and
the determination means (70) is adapted to determine a state of the cleaning means (36) based on the audible sound wave generated when the conveyance means (6) is not conveying the sheet (P).

9. The image forming apparatus (1) according to any of claims 1 to 5, further comprising a driving means adapted to drive at least one of the plurality of members,
wherein the determination means (70) is adapted to determine a state of the driving means based on the audible sound wave generated when the driving means is being driven.

10. The image forming apparatus according to claim 9, further comprising a plurality of the driving means,
wherein the determination means (70) is adapted to determine a state of one driving means, of the plurality of driving means, based on the audible sound wave generated when the one driving means is being driven.

11. The image forming apparatus according to any one of claims 1 to 10, wherein
the determination means (70) is adapted to determine, as the state of the member, whether or not the member is normal, or whether or not the member has reached its lifetime, and
the image forming apparatus (1) further comprises control means (3) adapted to perform, when the determination means (70) determines that the member is not normal, or the member has reached its lifetime, control in accordance with the member, and
wherein the control in accordance with the member includes control so as to reduce the audible sound wave generated from the member or control so as to perform notification of the member.

12. The image forming apparatus (1) according to any one of claims 1 to 11, wherein the detection means (30, 40) is adapted to detect a basis weight of the sheet (P) as the type of the sheet (P), or to detect a double feed of the sheet (P) as the state of the sheet (P).

13. The image forming apparatus (1) according to any one of claims 1 to 12, further comprising:
amplifier means (842) adapted to amplify a signal indicating a received ultrasonic wave and a received audible sound wave that the receiving means (71) outputs; and
setting means (80) adapted to set a first amplification factor to the amplifier means (842) when the detection means (30, 40) detects the type or state of the sheet (P), and set a second amplification factor to the amplifier means (842) when the determination means (70) determines the state of a member,
wherein the second amplification factor is smaller than the first amplification factor.

14. The image forming apparatus (1) according to claim 13,
wherein the setting means (80) is adapted to select the second amplification factor to be set to the amplifier means (842) from a plurality of amplification factors in accordance with a member whose state is to be determined by the determination means (70).

## Patentansprüche

1. Bilderzeugungsvorrichtung (1) mit:
einer Vielzahl von Elementen zum Erzeugen eines Bilds;
einer Übertragungseinrichtung (31), die eingerichtet ist, eine Ultraschallwelle zu übertragen;
einer Empfangseinrichtung (71), die eingerichtet ist, die Ultraschallwelle, die von der Übertragungseinrichtung (71) übertragen worden ist und durch ein Blatt (P) hindurchgegangen ist, und eine Hörschallwelle, die von zumindest einem der Vielzahl von Elementen erzeugt wird, zu empfangen, wobei die Empfangseinrichtung (71) eingerichtet ist, in der Lage zu sein, sowohl die Ultraschallwelle als auch die Hörschallwelle zu empfangen, und ein mikroelektromechanisches System-, MEMS-, Mikrofon umfasst, wobei das MEMS-Mikrofon umfasst:
eine Schwingungsmembran (71f), die entsprechend einer empfangenen Ultraschallwelle und einer empfangenen Hörschallwelle schwingt; und
eine Elektrode (71h), die bereitgestellt ist, um der Schwingungsmembran (71f) gegenüberzuliegen, und ein Signal entsprechend einem Schwingungszustand der Schwingungsmembran (71f) ausgibt, und
das MEMS-Mikrofon eingerichtet ist, eine Änderung in einer Kapazität eines Kondensators, der durch die Schwingungsmembran (71f) und Elektrode (71h) gebildet wird, in ein elektrisches Signal umzuwandeln;
einer Erfassungseinrichtung (30, 40), die eingerichtet ist, Informationen bezüglich eines Typs oder Zustands des Blatts (P) auf der Grundlage der Ultraschallwelle zu erfassen; und
einer Bestimmungseinrichtung (70), die eingerichtet ist, einen Zustand eines Elements, das die Hörschallwelle erzeugt hat, auf der Grundlage der Hörschallwelle zu bestimmen.

2. Bilderzeugungsvorrichtung (1) nach Anspruch 1, wobei die Bestimmungseinrichtung (70) eingerichtet ist, den Zustand des Elements auf der Grundlage der Hörschallwelle zu bestimmen, die erzeugt wird, wenn die Übertragungseinrichtung (31) die Ultraschallwelle nicht überträgt.

3. Bilderzeugungsvorrichtung (1) nach Anspruch 1 oder 2, wobei die Bestimmungseinrichtung (70) eingerichtet ist, den Zustand des Elements auf der Grundlage der Hörschallwelle zu bestimmen, die erzeugt wird, wenn die Bilderzeugungsvorrichtung (1) in Betrieb ist.

4. Bilderzeugungsvorrichtung (1) nach einem der Ansprüche 1 bis 3, wobei die Bestimmungseinrichtung (70) eingerichtet ist, Bestimmungsinformationen, die eine Korrespondenzbeziehung zwischen einem Element, dessen Zustand zu bestimmen ist, und einem Betriebszustand der Bilderzeugungsvorrichtung (1) zu halten und den Zustand des Elements, dessen Zustand zu bestimmen ist, unter Verwendung eines Empfangsergebnisses der Empfangseinrichtung (71), wenn die Bilderzeugungsvorrichtung (1) in dem Betriebszustand entsprechend dem Element ist, als ein Empfangsergebnis der Hörschallwelle, die durch die Empfangseinrichtung (71) erhalten wird, zu bestimmen.

5. Bilderzeugungsvorrichtung (1) nach Anspruch 4,
wobei die Empfangseinrichtung (71) eingerichtet ist, ein Signal auszugeben, das eine empfangene Hörschallwelle angibt, und
die Bestimmungsinformation (70) eingerichtet ist, eine Korrespondenzbeziehung zwischen einem Element, dessen Zustand zu bestimmen ist, und einem Filter anzugeben, der bei dem die Hörschallwelle angebenden Signal anzuwenden ist, das die Empfangseinrichtung (71) ausgegeben hat.

6. Bilderzeugungsvorrichtung (1) nach einem der Ansprüche 1 bis 5, ferner mit:
einer Zufuhreinrichtung (4, 5), die eingerichtet ist, ein Blatt (P), das bei einem Fach (2) gestapelt ist, zuzuführen; und
einer Beförderungseinrichtung (6), die eingerichtet ist, das Blatt (P), das durch die Zufuhreinrichtung (4, 5) zugeführt wird, entlang einem Beförderungspfad zu befördern,
wobei die Bestimmungseinrichtung (70) eingerichtet ist, wenn eine Drehantriebskraft zu der Zufuhreinrichtung (4, 5) ausgeschaltet ist, einen Zustand der Zufuhreinrichtung (4, 5) auf der Grundlage der Hörschallwelle zu bestimmen, die erzeugt wird, wenn das Blatt (P), das durch die Beförderungseinrichtung (6) zu befördern ist, von der Zufuhreinrichtung (4, 5) herausgezogen wird.

7. Bilderzeugungsvorrichtung (1) nach einem der Ansprüche 1 bis 5, ferner mit:
einer Beförderungseinrichtung (6), die eingerichtet ist, ein Blatt (P) entlang einem Beförderungspfad zu befördern; und
einer Bilderzeugungseinrichtung (11Y, 11M, 11C, 11K), die eingerichtet ist, ein Bild auf dem Blatt (P), das durch die Beförderungseinrichtung (6) befördert wird, zu erzeugen,
wobei die Bestimmungseinrichtung (70) eingerichtet ist, einen Zustand der Beförderungseinrichtung (6) oder der Bilderzeugungseinrichtung (11Y, 11M, 11C, 11K) auf der Grundlage der Hörschallwelle zu bestimmen, wenn die Beförderungseinrichtung (6) sich dreht, aber die Beförderungseinrichtung (6) das Blatt (P) nicht befördert.

8. Bilderzeugungsvorrichtung (1) noch einen der Ansprüche 1 bis 5, ferner mit:
einer Beförderungseinrichtung (6), die eingerichtet ist, ein Blatt (P) entlang einem Beförderungspfad zu befördern; und
einer Bilderzeugungseinrichtung (11Y, 11M, 11C, 11K), die eingerichtet ist, ein Bild auf dem Blatt (P), das durch die Beförderungseinrichtung (6) befördert wird, zu erzeugen,
wobei die Bilderzeugungseinrichtung (11Y, 11M, 11C, 11K) einen Bildträger (17), auf dem das Bild, das auf das Blatt (P) zu transferieren ist, erzeugt wird, und eine Reinigungseinrichtung (36) umfasst, die eingerichtet ist, den Bildträger (17) zu reinigen, und
die Bestimmungseinrichtung (70) eingerichtet ist, einen Zustand der Reinigungseinrichtung (36) auf der Grundlage der Hörschallwelle zu bestimmen, die erzeugt wird, wenn die Beförderungseinrichtung (6) das Blatt (P) nicht befördert.

9. Bilderzeugungsvorrichtung (1) nach einem der Ansprüche 1 bis 5, ferner mit einer Antriebseinrichtung, die eingerichtet ist, zumindest eines der Vielzahl von Elementen anzutreiben,
wobei die Bestimmungseinrichtung (70) eingerichtet ist, einen Zustand der Antriebseinrichtung auf der Grundlage der Hörschallwelle zu bestimmen, die erzeugt wird, wenn die Antriebseinrichtung angetrieben wird.

10. Bilderzeugungsvorrichtung nach Anspruch 9, ferner mit einer Vielzahl der Antriebseinrichtungen,
wobei die Bestimmungseinrichtung (70) eingerichtet ist, einen Zustand einer Antriebseinrichtung aus der Vielzahl von Antriebseinrichtungen auf der Grundlage der Hörschallwelle zu bestimmen, die erzeugt wird, wenn die eine Antriebseinrichtung angetrieben wird.

11. Bilderzeugungsvorrichtung nach einem der Ansprüche 1 bis 10, wobei die Bestimmungseinrichtung (70) eingerichtet ist, als den Zustand des Elements zu bestimmen, ob das Element normal ist oder nicht, oder ob das Element seine Lebensdauer erreicht hat oder nicht, und
die Bilderzeugungsvorrichtung (1) ferner eine Steuerungseinrichtung (3) umfasst, die eingerichtet ist, wenn die Bestimmungseinrichtung (70) bestimmt, dass das Element nicht normal ist, oder das Element seine Lebensdauer erreicht hat, eine Steuerung entsprechend dem Element auszuführen, und
wobei die Steuerung entsprechend dem Element eine Steuerung umfasst, um die Hörschallwelle, die von dem Element erzeugt wird, zu verringern, oder eine Steuerung umfasst, um eine Benachrichtigung über das Element auszuführen.

12. Bilderzeugungsvorrichtung (1) nach einem der Ansprüche 1 bis 11, wobei die Erfassungseinrichtung (30, 40) eingerichtet ist, ein Basisgewicht des Blatts (P) als den Typ des Blatts (P) zu erfassen oder eine doppelte Zufuhr des Blatts (P) als den Zustand des Blatts (P) zu erfassen.

13. Bilderzeugungsvorrichtung (1) noch einen der Ansprüche 1 bis 12, ferner mit:
einer Verstärkereinrichtung (842), die eingerichtet ist, ein Signal, das eine empfangene Ultraschallwelle und eine empfangene Hörschallwelle angibt, zu verstärken, das die Empfangseinrichtung (71) ausgibt; und
einer Einstellungseinrichtung (80), die eingerichtet ist, einen ersten Verstärkungsfaktor bei der Verstärkereinrichtung (842) einzustellen, wenn die Erfassungseinrichtung (30, 40) den Typ oder Zustand des Blatts (P) erfasst, und einen zweiten Verstärkungsfaktor bei der Verstärkereinrichtung (842) einzustellen, wenn die Bestimmungseinrichtung (70) den Zustand eines Elements bestimmt, und
wobei der zweite Verstärkungsfaktor kleiner als der erste Verstärkungsfaktor ist.

14. Bilderzeugungsvorrichtung (1) nach Anspruch 13,
wobei die Einstellungseinrichtung (80) eingerichtet ist, den zweiten Verstärkungsfaktor, der bei der Verstärkereinrichtung (842) einzustellen ist, aus einer Vielzahl von Verstärkungsfaktoren entsprechend einem Element, dessen Zustand durch die Bestimmungseinrichtung (70) zu bestimmen ist, auszuwählen.

## Revendications

1. Appareil de formation d'image (1) comprenant :
une pluralité d'éléments pour former une image ;
un moyen de transmission (31) adapté pour transmettre une onde ultrasonore ;
un moyen de réception (71) adapté pour recevoir l'onde ultrasonore qui a été transmise à partir du moyen de transmission (71) et qui a traversé une feuille (P) et une onde sonore audible qui est générée à partir d'au moins un de la pluralité d'éléments, dans lequel le moyen de réception (71) est adapté pour pouvoir recevoir à la fois l'onde ultrasonore et l'onde sonore audible, et comporte un microphone à système micro-électromécanique, MEMS, dans lequel le microphone MEMS comporte :
une membrane vibrante (71f) qui vibre conformément à une onde ultrasonore reçue et à une onde sonore audible reçue ; et
une électrode (71h) qui est prévue de manière à être opposée à la membrane vibrante (71f) et émet un signal correspondant à un état vibrant de la membrane vibrante (71f), et
le microphone MEMS est adapté pour convertir un changement de capacité d'un condensateur formé par la membrane vibrante (71f) et l'électrode (71h) en signal électrique ;
un moyen de détection (30, 40) adapté pour détecter des informations concernant un type ou un état de la feuille (P) sur la base de l'onde ultrasonore ; et
un moyen de détermination (70) adapté pour déterminer un état d'un élément qui a généré l'onde sonore audible sur la base de l'onde sonore audible.

2. Appareil de formation d'image (1) selon la revendication 1, dans lequel le moyen de détermination (70) est adapté pour déterminer l'état de l'élément sur la base de l'onde sonore audible générée lorsque le moyen de transmission (31) ne transmet pas l'onde ultrasonore.

3. Appareil de formation d'image (1) selon la revendication 1 ou 2, dans lequel le moyen de détermination (70) est adapté pour déterminer l'état de l'élément sur la base de l'onde sonore audible générée lorsque l'appareil de formation d'image (1) est en fonctionnement.

4. Appareil de formation d'image (1) selon l'une quelconque des revendications 1 à 3, dans lequel le moyen de détermination (70) est adapté pour retenir des informations de détermination indiquant une relation de correspondance entre un élément dont l'état doit être déterminé et un état de fonctionnement de l'appareil de formation d'image (1), et pour déterminer l'état de l'élément dont l'état doit être déterminé en utilisant un résultat de réception du moyen de réception (71) lorsque l'appareil de formation d'image (1) est dans l'état de fonctionnement correspondant à l'élément, en tant que résultat de réception de l'onde sonore audible obtenu par le moyen de réception (71).

5. Appareil de formation d'image (1) selon la revendication 4,
dans lequel le moyen de réception (71) est adapté pour émettre un signal indiquant une onde sonore audible reçue, et
les informations de détermination (70) sont adaptées pour indiquer une relation de correspondance entre un élément dont l'état doit être déterminé et un filtre devant être appliqué au signal indiquant l'onde sonore audible que le moyen de réception (71) a émise.

6. Appareil de formation d'image (1) selon l'une quelconque des revendications 1 à 5, comprenant en outre :
un moyen d'alimentation (4, 5) adapté pour apporter une feuille (P) empilée sur un plateau (2) ; et
un moyen de transport (6) adapté pour transporter la feuille (P) apportée par le moyen d'alimentation (4, 5) le long d'un chemin de transport,
dans lequel le moyen de détermination (70) est adapté, lorsqu'une force d'entraînement rotatif vers le moyen d'alimentation (4, 5) est coupée, pour déterminer un état du moyen d'alimentation (4, 5) sur la base de l'onde sonore audible générée lorsque la feuille (P) devant être transportée par le moyen de transport (6) est retirée du moyen d'alimentation (4, 5).

7. Appareil de formation d'image (1) selon l'une quelconque des revendications 1 à 5, comprenant en outre :
un moyen de transport (6) adapté pour transporter une feuille (P) le long d'un chemin de transport ; et
un moyen de formation d'image (11Y, 11M, 11C, 11K) adapté pour former une image sur la feuille (P) transportée par le moyen de transport (6),
dans lequel le moyen de détermination (70) est adapté pour déterminer un état du moyen de transport (6) ou du moyen de formation d'image (11Y, 11M, 11C, 11K) sur la base de l'onde sonore audible lorsque le moyen de transport (6) tourne, mais que le moyen de transport (6) ne transporte pas la feuille (P).

8. Appareil de formation d'image (1) selon l'une quelconque des revendications 1 à 5, comprenant en outre :
un moyen de transport (6) adapté pour transporter une feuille (P) le long d'un chemin de transport ; et
un moyen de formation d'image (11Y, 11M, 11C, 11K) adapté pour former une image sur la feuille (P) transportée par le moyen de transport (6),
dans lequel le moyen de formation d'image (11Y, 11M, 11C, 11K) comporte un porteur d'image (17) sur lequel l'image devant être transférée sur la feuille (P) est formée, et un moyen de nettoyage (36) qui est adapté pour nettoyer le porteur d'image (17), et
le moyen de détermination (70) est adapté pour déterminer un état du moyen de nettoyage (36) sur la base de l'onde sonore audible générée lorsque le moyen de transport (6) ne transporte pas la feuille (P).

9. Appareil de formation d'image (1) selon l'une quelconque des revendications 1 à 5, comprenant en outre un moyen d'entraînement adapté pour entraîner au moins un de la pluralité d'éléments,
dans lequel le moyen de détermination (70) est adapté pour déterminer un état du moyen d'entraînement sur la base de l'onde sonore audible générée lorsque le moyen d'entraînement est entraîné.

10. Appareil de formation d'image selon la revendication 9, comprenant en outre une pluralité des moyens d'entraînement,
dans lequel le moyen de détermination (70) est adapté pour déterminer un état d'un moyen d'entraînement, de la pluralité de moyens d'entraînement, sur la base de l'onde sonore audible générée lorsque ledit moyen d'entraînement est entraîné.

11. Appareil de formation d'image selon l'une quelconque des revendications 1 à 10, dans lequel
le moyen de détermination (70) est adapté pour déterminer, en tant qu'état de l'élément, si l'élément est normal ou non, ou si l'élément est à la fin de sa durée de vie ou non, et
l'appareil de formation d'image (1) comprend en outre un moyen de commande (3) adapté pour réaliser, lorsque le moyen de détermination (70) détermine que l'élément n'est pas normal ou que l'élément est à la fin de sa durée de vie, une commande conformément à l'élément, et
dans lequel la commande conformément à l'élément comprend une commande de manière à réduire l'onde sonore audible générée à partir de l'élément ou une commande de manière à réaliser une notification de l'élément.

12. Appareil de formation d'image (1) selon l'une quelconque des revendications 1 à 11, dans lequel le moyen de détection (30, 40) est adapté pour détecter un poids de base de la feuille (P) en tant que type de la feuille (P), ou pour détecter une double alimentation en feuille (P) en tant qu'état de la feuille (P).

13. Appareil de formation d'image (1) selon l'une quelconque des revendications 1 à 12, comprenant en outre :
un moyen d'amplification (842) adapté pour amplifier un signal indiquant une onde ultrasonore reçue et une onde sonore audible reçue que le moyen de réception (71) émet ; et
un moyen de réglage (80) adapté pour régler un premier facteur d'amplification sur le moyen d'amplification (842) lorsque le moyen de détection (30, 40) détecte le type ou l'état de la feuille (P), et régler un second facteur d'amplification sur le moyen d'amplification (842) lorsque le moyen de détermination (70) détermine l'état d'un élément,
dans lequel le second facteur d'amplification est inférieur au premier facteur d'amplification.

14. Appareil de formation d'image (1) selon la revendication 13,
dans lequel le moyen de réglage (80) est adapté pour sélectionner le second facteur d'amplification devant être réglé sur le moyen d'amplification (842) parmi une pluralité de facteurs d'amplification conformément à un élément dont l'état doit être déterminé par le moyen de détermination (70).
